# EUROPÄISCHE PATENTSCHRIFT

(11) **EP 0 642 755 B1**
(45) Veröffentlichungstag und Bekanntmachung des Hinweises auf die Patenterteilung: **09.04.1997**
(21) Anmeldenummer: 94113931.3
(22) Anmeldetag: 06.09.1994
(51) Int. Cl.: A47J 31/40

(54) **Steuerung für einen Kaffeemaschinenautomaten**
Control for an automated coffee machine
Contrôle pour une machine à café automatique

(30) Priorität: 14.09.1993 DE 4331164
(43) Veröffentlichungstag der Anmeldung: 15.03.1995
(73) Patentinhaber: HGZ Maschinenbau AG, CH-8108 Dällikon - ZH (CH)
(72) Erfinder: Künzler, Bernhard, CH-8046 Zürich (CH)
(74) Vertreter: Rehberg, Elmar, Dipl.-Ing.

(56) Entgegenhaltungen:
- DE-C- 3 615 158
- FR-A- 2 226 137
- GB-A- 2 128 006
- US-A- 3 806 874
- PATENT ABSTRACTS OF JAPAN vol. 16, no. 268 (P-1372) 17. Juni 1992 & JP-A-04 068 492 (UJIMA NOBUTOSHI) 4. März 1992

## Beschreibung

Die Erfindung bezieht sich auf eine Steuerung für einen Kaffeemaschinenautomaten, der mindestens eine Einrichtung zur Zufuhr von Kaffeepulver, einen Heißwasserbereiter, einen Brühraum, einen Auslauf und mindestens eine Wahltaste aufweist, wobei die Steuerung bei Betätigung der Wahltaste einen Zubereitungszyklus für ein festgelegtes Getränk, insbesondere eine einfache Getränkemenge, startet (siehe die Druckschrift DE-C-3 615 158).

Unter einem Kaffeemaschinenautomaten wird eine Maschine verstanden, bei der die Zubereitungsvorgänge automatisch erfolgen, insbesondere das Mahlen des Kaffeepulvers, das Einbringen des Kaffeepulvers in den Brühraum, der Brühvorgang selbst und der Ausstoß des ausgelaugten Kaffeepulvers in Form des Ausschiebens der ausgelaugten und ausgepreßten Tablette von Kaffeepulver. Manuell muß lediglich ein Zubereitungszyklus durch das Drücken einer Wahltaste gestartet werden.

Ein bekannter Kaffeemaschinenautomat weist eine Steuerung auf, die mit einer relativ großen Anzahl von Wahltasten ausgestattet ist. Dabei gibt es Wahltasten für verschiedene Getränkemengen einerseits und verschiedene Kaffeetypen andererseits. Als Getränkemengen werden z. B. eine große, eine mittlere und eine kleine Tasse sowie eine Karaffe unterschieden. Als Kaffeetypen können Normalkaffee, coffeinfreier Kaffee, Espresso u. dgl. unterschieden werden. Unterschiedlich große Getränkemengen des gleichen Kaffeetyps sind meist zwei übereinander angeordnete Wahltasten zugeordnet, wobei die obere Wahltaste der einfachen Getränkemenge und die untere Wahltaste der doppelten Getränkemenge zugeordnet ist. Dies bezieht sich immer auf die Herstellung des Getränks in einem Zyklus. Wird also die obere Taste, die der einfachen Getränkemenge zugeordnet ist, gedrückt, dann wird in einem Zyklus diese einfache festgelegte Getränkemenge hergestellt und ausgegeben. Wird dagegen die untere Wahltaste gedrückt, die der doppelten Getränkemenge zugeordnet ist, dann wird in einem Zyklus diese doppelte Getränkemenge hergestellt und ausgegeben. Die gleiche doppelte Getränkemenge kann auch dadurch erstellt werden, daß die obere Wahltaste zweimal gedrückt wird; dann wird die doppelte Getränkemenge ebenfalls erstellt, jedoch in zwei hintereinander ablaufenden und ansonsten von einander getrennten Zyklen. Durch die Vielzahl der Mengen- und Kaffeetypenkombinationen wird die Anzahl der Wahltasten an einem solchen Getränkeautomaten relativ groß. Sie liegt meist in der Größenordnung zwischen 10 und 20 Wahltasten, was nicht nur einen erheblichen konstruktiven Aufwand darstellt, sondern auch zu einer Verwirrung durch den Benutzer des Kaffeemaschinenautomaten führen kann, indem die Übersichtlichkeit leidet. Infolge dieser Unübersichtlichkeit kann sich auch der Auswahl- und Betätigungsvorgang durch einen Benutzer des Kaffeemaschinenautomaten zeitlich ausdehnen, wodurch der Ausgabefluß von Kaffeegetränk bei starkem Andrang verzögern kann. Es kommt also auch darauf an, kurze Ausgabezeiten zu verwirklichen, insbesondere dann, wenn größere Getränkemengen im Sinne von Doppelportionen ausgegeben werden.

Der Erfindung liegt die Aufgabe zugrunde, eine Steuerung der eingangs beschriebenen Art bereitzustellen, die eine rasche Getränkeausgabe ermöglicht sowie bedienungsfreundlich und übersichtlich gestaltet ist.

Erfindungsgemäß wird dies bei der Steuerung der eingangs beschriebenen Art dadurch erreicht, daß die Steuerung nach der Betätigung die betätigte Wahltaste für einen vorgegebenen Zeitraum abfragt und bei erneuter Betätigung innerhalb des vorgegebenen Zeitraums den begonnenen Zubereitungszyklus zwecks Zubereitung eines Getränks mit veränderten Parametern, insbesondere einer vergrößerten Getränkemenge, in einem Zyklus verlängert.

Die Erfindung geht von dem Gedanken aus, mit einer Wahltaste mehrere Zubereitungsmöglichkeiten zu verknüpfen, je nach dem, ob diese Wahltaste innerhalb eines vorgegebenen Zeitraums nur einmal oder beispielsweise zweimal oder mehrmals gedrückt wird. Bei diesem Steuerungsverfahren wird bei einem einmaligen Drücken einer Wahltaste wie bisher auch die festgelegte einfache Getränkemenge in einem Zubereitungszyklus hergestellt. Wird abweichend dazu diese Wahltaste innerhalb eines vorgegebenen Zeitraums beispielsweise zweimal gedrückt, so wird beispielsweise die doppelte Getränkemenge hergestellt. Es laufen dann nicht zwei Zubereitungszyklen, die jeweils der einfachen festgelegten Getränkemenge zugeordnet wären, ab, sondern es wird in einem einzigen Zyklus die vergrößerte Getränkemenge hergestellt, wobei sich die Herstellungsparameter während des Zubereitungszyklusses ändern. Dies bezieht sich insbesondere auf die Mahldauer der betreffenden Kaffeemühle, das Öffnungsintervall für die Zufuhr von Heißwasser sowie für Besonderheiten hinsichtlich typischer Behandlungsschritte für die jeweiligen Getränkemengen. Bei einem zweimaligen Drücken innerhalb des überwachten Zeitraums kann auch im Vergleich zum einmaligen Drücken die Wassermenge abnehmen und die Mahldauer der betreffenden Kaffeemühle zunehmen; es kann mit anderen Worten auch ein Wechsel in der Kaffeeart stattfinden.

Durch die neue Steuerung wird vorteilhaft die Anzahl der Wahltasten halbiert, was nicht nur der Übersichtlichkeit und der dekorativen Ansicht der Vorderseite des Kaffeemaschinenautomaten zugute kommt. Es vereinfacht sich auch insgesamt der konstruktive Aufwand. Der Kaffeemaschinenautomat läßt sich einfacher und schneller bedienen, und es ergibt sich trotz vermindertem konstruktiven Aufwand eine hohe Anzahl von Wahlmöglichkeiten. Die Wahlmöglichkeiten sind auch sinngemäß einleuchtend, so daß die Benutzung vereinfacht wird. Auch die Ausgabe- und Zubereitungszeiten sind relativ kurz, weil auch der einem veränderten Getränk zugeordnete Zubereitungszyklus bereits mit dem ersten Betätigen der Wahltaste gestartet wird.

Die vergrößerte Getränkemenge wird durch Fortsetzung der einzelnen Schritte des Zubereitungszyklusses der einfachen Getränkemenge erzeugt. Dies bezieht sich insbesondere auf das Mahlen des Kaffeepulvers, also den zu Beginn eines Zyklusses einsetzenden Vorgang. Die übrigen Behandlungsschritte, die während dem ersten und dem zweiten Drücken der Wahltaste noch nicht begonnen haben, können auch komplett gegen andere Behandlungsschritte ausgetauscht werden, müssen also nicht fortgesetzt werden.

Der vorgegebene Zeitraum sollte sich in der Größenordnung von etwa 1 bis 2 sec. bewegen. Dieser Zeitraum kann durch ein entsprechendes Zeitglied entweder fest vorgegeben sein, oder aber einstellbar gestaltet sein, um eine Anpassung an die Betätigungsgewohnheiten zu ermöglichen.

Insbesondere kann die vergrößerte Getränkemenge dem Doppelten der einfachen Getränkemenge entsprechen. Auch für große und kleine Tassen kann auf diese Art und Weise unterschieden werden. Die doppelte Getränkemenge muß sich nicht notwendigerweise auch auf die doppelte Einsatzmenge an Kaffeepulver beziehen; hier kann vielmehr eine Einsparung zugeordnet sein.

Beim ersten Betätigen der Wahltaste werden die der einfachen Getränkemenge zugeordneten Parameter in einen Arbeitsspeicher geladen und der Zyklus gestartet. Bei einem erneuten Betätigen der Wahltaste innerhalb des vorgegebenen Zeitraums werden die zunächst eingespeicherten Parameter der einfachen Getränkemenge durch die Parameter der vergrößerten Getränkemenge überschrieben, und der begonnene Zubereitungszyklus wird mit den neuen Parametern fortgesetzt, durchgeführt und beendet.

Es ist auch möglich, die Steuerung auf eine dreifache Betätigungsmöglichkeit zu erweitern. Grundsätzlich ist eine Erweiterung auf mehrfache Betätigung möglich. Bei einer allzu großen Betätigunganzahl können jedoch Schwierigkeiten im Durchführen und Feststellen des Betätigungstaktes erfolgen. Bei dreifacher Betätigungsmöglichkeit wird der festgelegte Zeitraum etwas vergrößert, und es wird abgefragt, ob die Betätigung der Wahltaste innerhalb des vergrößerten Zeitraumes einmal, zweimal oder dreimal durchgeführt wird.

Als Parameter kann zumindest die Menge des Kaffeepulvers, die Menge des zugehörigen Heißwassers sowie die Kaffeevorbehandlungen gespeichert werden. Die Kaffeevorbehandlungen können in einem Vorpressen der Kaffeepulvertablette im Brühraum, einer entsprechenden Entlastung der gepreßten Tablette oder anderen ähnlichen Verfahrensschritten bestehen. Obwohl die vorliegende Erfindung nur im Zusammenhang mit der Herstellung von Kaffee als Getränk, auch in Verbindung mit verschiedenen Kaffeetypen, beschrieben wurde, versteht es sich, daß die Erfindung auch z. B. auf die Herstellung einer Tasse Schokolade als Getränk oder auch auf das Abzapfen von Heißwasser für die Teezubereitung u. dgl. anwendbar ist.

Ein Ausführungsbeispiel der erfindungsgemäßen Steuerung wird im Nachfolgenden beschrieben und erläutert. Es zeigen:
- Figur 1: eine schematisierte Darstellung der Tastatur eines Kaffeemaschinenautomaten mit den für die Erfindung wesentlichen Teilen und
- Figur 2: eine Steuerungsabfolge zur Verdeutlichung des Verfahrens.

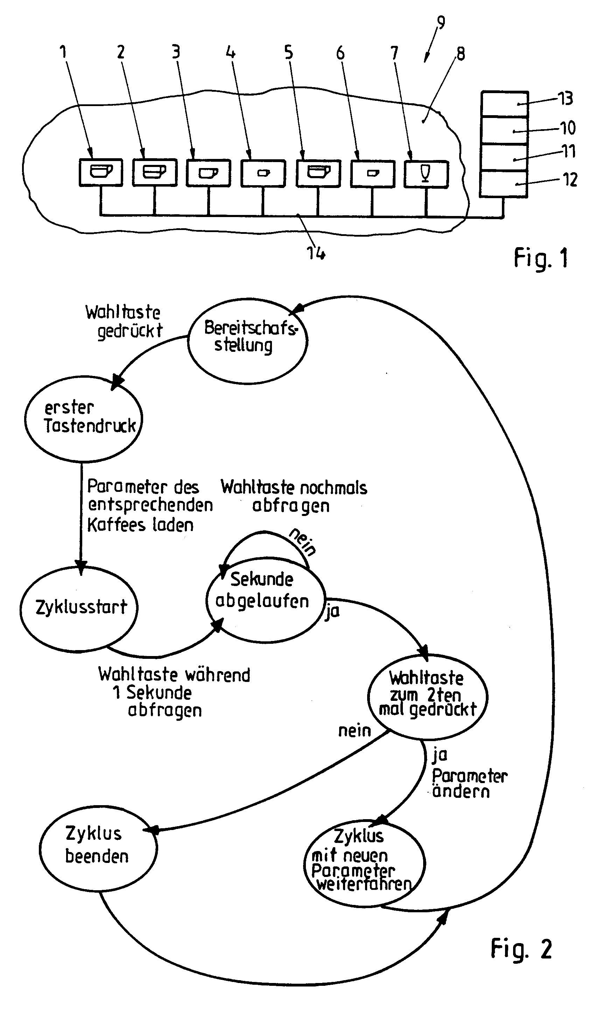

In Figur 1 sind beispielhaft 7 Wahltasten 1, 2, 3, ... 7 an der vorderen Bedienseite 8 eines Kaffeemaschinenautomaten 9 dargestellt. Die Bedientaste 1 ist für die Herstellung und Ausgabe einer großen Tasse Normalkaffee bestimmt. Die Bedientaste 2 ist für die Ausgabe einer mittleren Tasse Normalkaffee bestimmt. Die Wahltaste 3 dient zur Herstellung einer kleinen Tasse Normalkaffee, während der Bedientaste 4 eine sehr kleine Tasse Normalkaffee zugeordnet ist. Die Bedientaste 5 ist der Herstellung und Ausgabe einer großen Tasse coffeinfreien Kaffees zugeordnet, während die Bedientaste 6 eine kleine Taste coffeinfreien Kaffees nach sich zieht. Die Bedientaste 7 steuert die Ausgabe eines Spezialkaffees. Es versteht sich, daß diese Belegung nur beispielhaft aufgeführt ist und auch für andere Volumeneinteilungen und andere Kaffeetypen sowie für sonstige Getränke, wie Schokolade, Heißwasser für Tee u. dgl. ausgebildet sein kann. Generell gilt, daß durch einmaliges Drücken einer der Wahltasten 1 bis 7 eine einfache Menge an dem betreffenden Getränk in einen einzigen Zyklus hergestellt und ausgegeben wird. Bei zweimaligem Drücken der gleichen Wahltaste 1 bis 7 innerhalb eines vorgegebenen Zeitraums erfolgt die Herstellung und Ausgabe eines Doppelkaffees , der in einem einzigen Zyklus hergestellt und ausgegeben wird. Wird dagegen die betreffende Wahltaste zwar zweimal, jedoch so, daß das zweite Drücken außerhalb des durch das erste Drücken gestarteten Zeitraums erfolgt, dann erfolgt die Herstellung eines Doppelkaffees durch zwei separat und hintereinander ablaufende Zyklen. Dies ist gleichbedeutend mit dem Drücken der Wahltaste durch zwei unterschiedliche Benutzer nacheinander. Im Innern des Kaffeemaschinenautomaten 9 ist eine Steuereinrichtung 10 vorgesehen, die einen Arbeitsspeicher 11 und ein Zeitglied 12 aufweist. Ein Programmspeicher 13 dient der Abspeicherung der verschiedenen Herstellungsprogramme insgesamt.

Die Steuerung funktioniert wie folgt:
Wenn beispielsweise der Benutzer des Kaffeemaschinenautomaten in einem einzigen Zyklus eine mittlere Tasse Normalkaffee herstellen und erhalten möchte, so stellt er eine entsprechend große Kaffeetasse unter den Getränkeauslauf und betätigt die Wahltaste 2 einmal. Durch diesen Betätigungsvorgang lädt die Steuereinrichtung 10 aus dem Programmspeicher 13 die betreffenden Parameter für eine mittlere Tasse Normalkaffee in den Arbeitsspeicher 11. Mit sehr kurzer Zeitverzögerung wird sodann der Mahlvorgang gestartet, und es erfolgt das Einmahlen von Kaffeepulver in den oben geöffneten Brühraum. Gleichzeitig mit dem Starten dieses ersten Zyklusses wird als Zeitglied 12 eine Uhr in Tätigkeit gesetzt, an der eine festgelegte Zeitdauer abläuft. Während dieser Zeitdauer wird kontinuierlich oder in Schritten über eine entsprechende Leitung 14, die auch der Übertragung der sonstigen Informationen dient, die Wahltaste 2 abgefragt, ob eine erneute Betätigung, also eine zusätzliche (zweite) Betätigung erfolgt oder nicht. Wenn eine solche zweite Betätigung innerhalb der über das Zeitglied 12 ablaufenden Zeitdauer nicht erfolgt, wird der Zyklus entsprechend der Beladung des Arbeitsspeichers 11 durchgeführt und abgeschlossen. Der Benutzer des Kaffeemaschinenautomaten 9 erhält auf diese Weise eine mittlere Tasse Normalkaffee, die in einem Zyklus hergestellt ist.

Stellt dagegen die Steuereinrichtung 10 fest, daß innerhalb der vorgegebenen Zeiteinheit durch das Zeitglied 12 eine zusätzliche zweite Betätigung der Wahltaste 2 erfolgt, was dem Abruf eines Doppelkaffees einer mittleren Tasse Normalkaffees entspricht, dann wird das betreffende Programm aus dem Programmspeicher 13 in den Arbeitsspeicher 11 überführt, das zuvor eingespeicherte Programm gelöscht bzw. überschrieben, so daß der Doppelkaffee in Fortsetzung des zunächst eingeleiteten Zyklusses, jedoch insgesamt auch nur in einem einzigen Zyklus hergestellt wird.

Ein solcher Doppelkaffee kann beispielsweise dadurch aufgefangen werden, daß unter einen Auslauf mit zwei im Abstand voneinander angeordneten Auslaufrohren je eine Tasse für eine mittelgroße Portion aufgestellt werden. Selbstverständlich kann auch ein einziges, jedoch größeres Gefäß aufgestellt werden, in das hinein die Ausgabe des Kaffees über die beiden Auslaufrohre gemeinsam erfolgt.

Erfolgt jedoch ein zweimaliges Drücken nicht innerhalb des vorgegebenen Zeitraums durch das Zeitglied 12, sondern zeitlich so versetzt, daß die zweite Betätigung erst nach Ablauf des vorgesehenen Zeitraums durch das Zeitglied 12 erfolgt, so gleicht dieser Vorgang all jenen Vorgängen, bei denen durch nachfolgende Benutzer in relativ großen zeitlichen Abständen die gleiche Wahltaste gedrückt wird. Mit jedem Drücken ist dann ein gesonderter einfacher Zyklus verbunden.

Gemäß Figur 2 wird nochmals die Abfolge der Schritte der Steuerung erläutert. Zu Beginn befindet sich der Kaffeemaschinenautomat in der Bereitschaftsstellung, d. h. der Kaffeemaschinenautomat ist eingeschaltet, und die Einrichtung zur Bereitstellung von Heißwasser hat die vorgesehene Dauertemperatur des Heißwassers erreicht. Es erfolgt nun die Betätigung einer der Wahltasten 1, 2, 3, ... 7 durch den Benutzer, worauf die Parameter des entsprechenden Kaffees von dem Programmspeicher 13 in den Arbeitsspeicher 11 geladen werden. Der Start des Zyklusses wird ausgelöst. Innerhalb des vorgegebenen Zeitraums wird abgefragt, ob eine zweite Betätigung der identischen Wahltaste erfolgt oder nicht. Erfolgt dies nicht, wird der erst eingeleitete Zyklus beendet. Liegt eine zweite Betätigung der Wahltaste vor, dann werden die Parameter geändert und der Zyklus mit den neuen Parametern weitergefahren.

## Patentansprüche

1. Steuerung für einen Kaffeemaschinenautomaten, der mindestens eine Einrichtung zur Zufuhr von Kaffeepulver, einen Heißwasserbereiter, einen Brühraum, einen Auslauf und mindestens eine Wahltaste (1) aufweist, wobei die Steuerung bei Betätigung der Wahltaste (1) einen Zubereitungszyklus für ein festgelegtes Getränk, insbesondere eine einfache Getränkemenge, startet, dadurch gekennzeichnet, daß die Steuerung nach der Betätigung die betätigte Wahltaste (1) für einen vorgegebenen Zeitraum abfragt und bei erneuter Betätigung innerhalb des vorgegebenen Zeitraums den begonnen Zubereitungszyklus zwecks Zubereitung eines Getränks mit veränderten Parametern, insbesondere einer vergrößerten Getränkemenge, in einem Zyklus verlängert.

2. Steuerung nach Anspruch 1, dadurch gekennzeichnet, daß das veränderte Getränk durch Fortsetzung der einzelnen Schritte des Zubereitungszyklusses des einfachen Getränks erzeugt wird.

3. Steuerung nach Anspruch 1 oder 2, dadurch gekennzeichnet, daß der vorgegebene Zeitraum 1 bis 2 s beträgt.

4. Steuerung nach einem der Ansprüche 1 bis 3, dadurch gekennzeichnet, daß die vergrößerte Getränkemenge dem Doppelten der einfachen Getränkemenge entspricht.

5. Steuerung nach einem der Ansprüche 1 bis 4, dadurch gekennzeichnet, daß beim ersten Betätigen der Wahltaste (1) die der einfachen Getränkemenge zugeordneten Parameter in einen Arbeitsspeicher (11) geladen werden, der beim erneuten Betätigen der Wahltaste (1) innerhalb des vorgegebenen Zeitraums durch die Parameter der vergrößerten Getränkemenge überschrieben wird und daß der begonnene Zubereitungszyklus mit den neuen Parametern fortgesetzt wird.

6. Steuerung nach einem der Ansprüche 1 bis 5, dadurch gekennzeichnet, daß sie auf eine dreifache Betätigungsmöglichkeit erweitert ist.

7. Steuerung nach Anspruch 5, dadurch gekennzeichnet, daß als Parameter die Menge des Kaffeepulvers, die Menge des zugehörigen Heißwassers und die Kaffeevorbehandlungen gespeichert werden.

## Claims

1. Controlling means for an automatic coffee machine, which has at least one means for supplying ground coffee, a water heating device, a brewing chamber, a spout, and at least one selector (1), in which the controlling means starts a preparation cycle for a predetermined beverage, especially a single serving of the beverage, upon the actuation of the selector (1), **characterized in that** the controlling means monitors the selector (1) a predetermined amount of time after its actuation and prolongs the started preparation cycle upon a renewed actuation of the selector within the predetermined amount of time for preparing a beverage with modified parameters, especially an enlarged amount of beverage.

2. Controlling means according to claim 1, **characterized in that** the modified beverage is created by continuation of the individual steps of the preparation cycle of the single serving.

3. Controlling means according to claim 1 or 2, **characterized in that** the predetermined amount of time is 1 to 2 s.

4. Controlling means according to one of the claims 1 to 3, **characterized in that** the enlarged amount of beverage corresponds to double the single serving of the beverage.

5. Controlling means according to one of the claims 1 to 4, **characterized in that** upon the first actuation of the selector (1) the parameters assigned to the single serving of the beverage are loaded into a working memory (11), which is superseded by the parameters of the enlarged amount of beverage upon the renewed actuation of the selector in the predetermined amount of time, and in that the started preparation cycle is continued with the new parameters.

6. Controlling means according to one of the claims 1 to 5, **characterized in that** it is extended to a possible third actuation.

7. Controlling means according to claim 5, **characterized in that** the amount of ground coffee, the corresponding amount of hot water, and the pre-treatment of the coffee are stored as parameters.

## Revendications

1. Commande de machine à café automatique, qui comporte au moins un dispositif d'alimentation de poudre de café, un chauffe-eau, une chambre d'ébouillantage, une évacuation et au moins une touche de sélection (1), en cas d'actionnement de la touche de sélection (1), la commande démarrant un cycle de préparation pour une boisson définie, en particulier une quantité simple de boisson, caractérisée en ce qu'après actionnement, la commande interroge la touche de sélection (1) actionnée pendant une période de temps donnée et en cas de nouvel actionnement à l'intérieur de la période de temps donnée, prolonge en un cycle le cycle de préparation commencé, en vue de la préparation d'une boisson présentant des paramètres modifiés, en particulier une quantité de boisson augmentée.

2. Commande selon la revendication 1, caractérisée en ce que la boisson modifiée est produite par poursuite des différentes étapes du cycle de préparation de la boisson simple.

3. Commande selon la revendication 1 ou 2, caractérisée en ce que la période de temps donnée est de 1 à 2 s.

4. Commande selon l'une des revendications 1 à 3, caractérisée en ce que la quantité de boisson augmentée corresponde au double de la quantité simple de boisson.

5. Commande selon l'une des revendications 1 à 4, caractérisée en ce que lors du premier actionnement de la touche de sélection (1), les paramètres associés à la quantité simple de boisson, sont charges dans une mémoire de travail (11), qui, lors de l'actionnement renouvelé de la touche de sélection (1), sont écrasés pendant la période de temps donnée, par les paramètres de la quantité de boisson augmentée et en ce que le cycle de préparation commencé est poursuivi avec les nouveaux paramètres.

6. Commande selon l'une des revendications 1 à 5, caractérisée en ce qu'elle est élargie à une triple possibilité d'actionnement.

7. Commande selon la revendication 5, caractérisée en ce que comme paramètres sont mémorisés la quantité de poudre de café, la quantité d'eau chaude correspondante et les prétraitements du café.
